# EUROPEAN PATENT SPECIFICATION

(11) **EP 2 012 547 B1**
(45) Date of publication and mention of the grant of the patent: **25.08.2010**
(21) Application number: 07720930.2
(22) Date of filing: 24.04.2007
(51) Int. Cl.: H04L 12/56, H04L 12/24

(54) **Topology scan method and scan system**
Topologie-Scanverfahren und Scansystem
Procédé et système de balayage topologique

(30) Priority: 25.04.2006 CN 200610076049
(43) Date of publication of application: 07.01.2009
(73) Proprietor: Huawei Technologies Co., Ltd., Longgang District, Shenzhen Guangdong 518129 (CN)
(72) Inventor: ZHOU, Jun, Guangdong 518129 (CN)
(74) Representative: Körber, Martin Hans
(86) International application number: PCT/CN2007/001357
(87) International publication number: WO 2007/121681

(56) References cited:
- WO-A-00/31925
- WO-A1-02/080597
- US-B1- 6 928 059

## Description

### Field of the Invention

The present invention relates to communication field, and particularly, to a method for constructing topology information and a system, a master device, a slave device, computer program product and computer-readable medium thereof.

### Background of the Invention

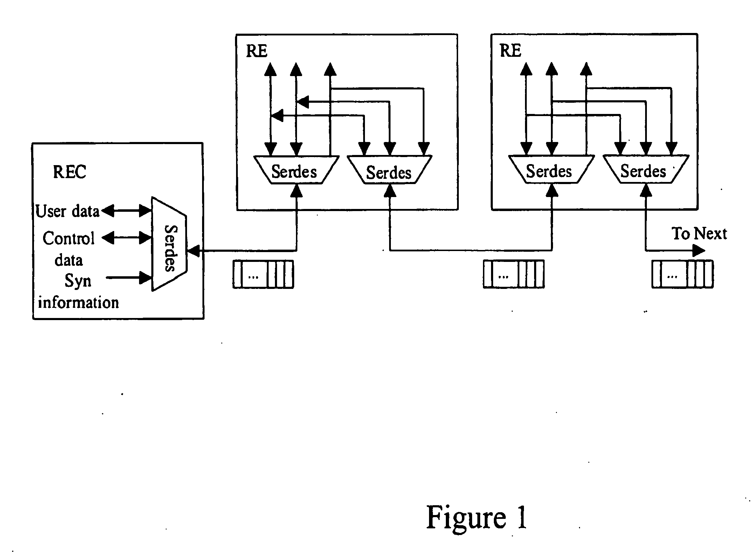

In a radio communication system, particularly in a distributed base station, a serial concatenated bus has been used widely. For example, in the distributed base station shown in Figure 1, the serial concatenated bus is formed by Serialize and Deserialize (Serdes) function, Radio Equipment Controller (REC) and several concatenated Radio Equipment (RE). The serial concatenated bus is mainly made up of three logic channels: a user data channel, a control data channel and a synchronous information channel. The REC and the RE share the above three logic channels. In Common Public Radio Interface (CAPRI) logic model, the above three logic channels shared by REC and RE are respectively denoted as SAP_{IQ}, SAP_{CM} and SAP_{S}. The REC is master device, the RE is slave device, the CPRI of the REC is a Master Port, the CPRI located on the RE and connected with the device of higher level is a Slave Port, and the port located on the RE and connected with the device of lower level is the Master Port. The master device transfers the forward user plane data via the user data channel, and the slave device transfers the reverse user plane data (e.g., IQ data) to the master device via the user data channel. The master device controls the slave device by setting address information related with control data, the slave device feedbacks control data to the master device via the control data channel, and the control data is generally divided into physical layer control information and higher level control information.

In the defined CPRI frame format, a control data field is defined on the basis of a 10ms basic frame, NodeB Frame Number (BFN), in the Wide-band Code Division Multiple Access (WCDMA) system.

CPRI control field defined in the standard is shown in Table. 1.

**Table 1**

| subchannel number Ns | purpose of subchannel | Xs=0 | Xs=1 | Xs=2 | Xs=3 |
|---|---|---|---|---|---|
| 0 | sync&timing | sync byte K28.5 | HFN | BFN-low | BFN-high |
| 1 | slow C&M | slow C&M | slow C&M | slow C&M | slow C&M |
| 2 | L1 inband prot. | version | startup | L1-reset-LOS. | pointer p |
| 3 | reserved | reserved | reserved | reserved | reserved |
| ... | ... | ... | ... | ... | ... |
| 15 | reserved | reserved | reserved | reserved | reserved |
| 16 | Port ID | RTWP | LoESCAM | Topology Type | Hop/Hoptotal |
| 17 | vendor specific | vendorspecific | vendor specific | vendor specific | vendor specific |
| 18 | vendor specific | vendor specific | vendor specific | vendor specific | vendor specific |
| 19 | vendor specific | vendor specific | vendor specific | vendor specific | vendor specific |
| ... | ... | ... | ... | ... | ... |
| p-1 | vendor specific | reserved ofvs | reserved ofvs | reserved of vs | reserved of vs |
| pointer: p | faster C&M | faster C&M | faster C&M | faster C&M | faster C&M |
| ... | ... | ... | ... | ... | ... |
| 63 | faster C&M | faster C&M | faster C&M | faster C&M | faster C&M |

It can be seen from Table 1 that a Port ID field and an HOP field have been defined when the subchannel number is 16. For the HOP field, HOP+1 written in the downlink denotes the number of hops at the current location of the concatenated RE; HOPtotal written in the uplink denotes the quantity of all of the concatenated REs. For the Port ID field, there is the port number corresponding to REC in the downlink direction; and the Port ID field is currently preserved for the distributed base station in uplink direction. The Port ID field has not been used in the mechanism of scanning topology.

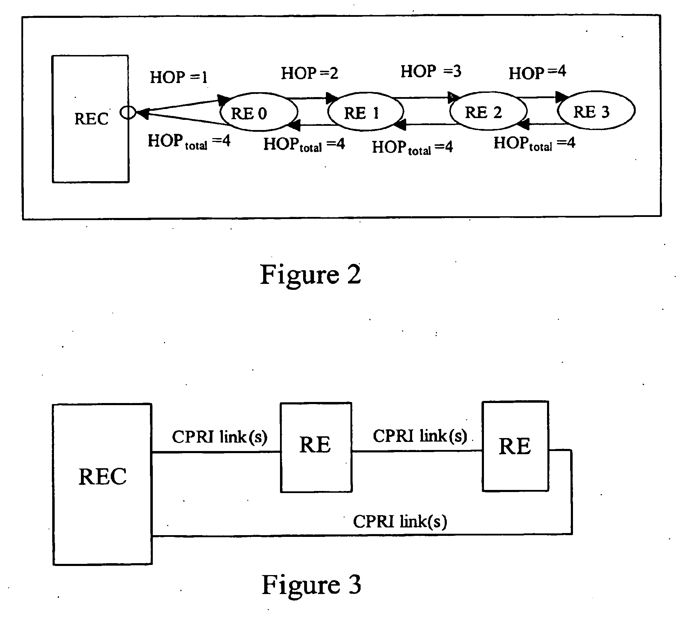

The algorithm based on HOP automatic distribution shown in Figure 2 is used to identify the concatenated RE. The algorithm includes the following processes of: for the HOP field, writing HOP+1 in the downlink transmission based on the definition of the CPRI control field, to denote the number of hops at the current location of the concatenated RE; writing HOPtotal in the uplink transmission to denote the quantity of all concatenated REs. When the CPRI control field is set via the abovementioned algorithm, every concatenated RE obtains the total concatenated number HOPtotal on the concatenated bus and the concatenated number HOP of the concatenated RE from the CPRI control field.

With quite a few kinds of network between the REC and the RE, the commonly-used topology includes: the ring topology shown in Figure 3, the star topology shown in Figure 4, and the chain topology shown in Figure 5. For the chain structure, the system can construct a corresponding topology according to the method abovementioned; for the ring and star structures, because there are two ports or multiple ports connected with RE in one REC, the system fails to scan and obtain the corresponding topology by the method abovementioned. Therefore, in the process of obtaining a topology by the REC, a manual configuration is needed, so it is hard to avoid the problems such as artificial errors, heavy network maintenance workload, and incapability of Plug and Play.

WO 00/31925 discloses a loop network detecting method, a first node transmits probe messages on one or more output ports. Each message is provided with a unique identification, identifying the probe message origin. The probe message is forwarded with the hop-count by some nodes in the network and reach the first node finally, the first node would determining the existence of loop network according to the received probe message. The method can only be used to detect the loop network.

### Summary of the Invention

This invention provides a method for constructing a topology information according to claim 1, a master device for constructing topology information according to claim 8, a slave device for constructing topology information according to claim 6 and a system for constructing topology information according to claim 11, which are capable of implementing the function for the automatic scanning of the topology as well as Plug and Play function, and reducing the amount of network maintenance work.

It can be seen from the solution provided by this invention that the master device can obtain port information and slave device information via an automatic topology scanning, and the master device constructs the topology information for connecting a master device with a slave. Therefore, the master device in the present invention can implement the function of the automatic scanning and constructing the topology as well as Plug and Play function, reduce the amount of data configuration work, and simplify the maintenance work for network.

### Brief Description of the Drawings

Figure 1 is a block diagram illustrating a conventional concatenated communication system.
Figure 2 shows a conventional principle of HOP automatic distribution.
Figure 3 is a schematic illustrating a conventional architecture of ring networking.

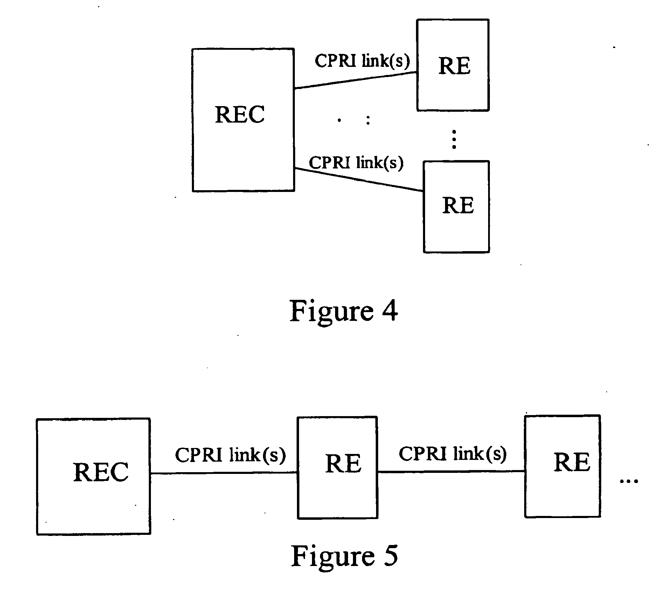

Figure 4 is a schematic illustrating a conventional architecture of star networking.
Figure 5 is a schematic illustrating a conventional architecture of chain networking.

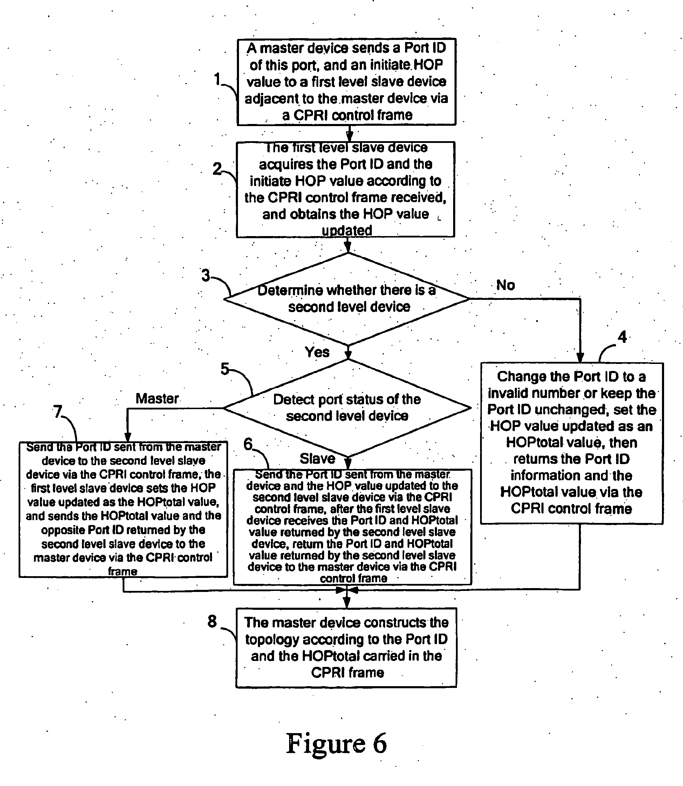

Figure 6 is a flow chart of a scanning system constructing a topology according to an embodiment of the present invention.

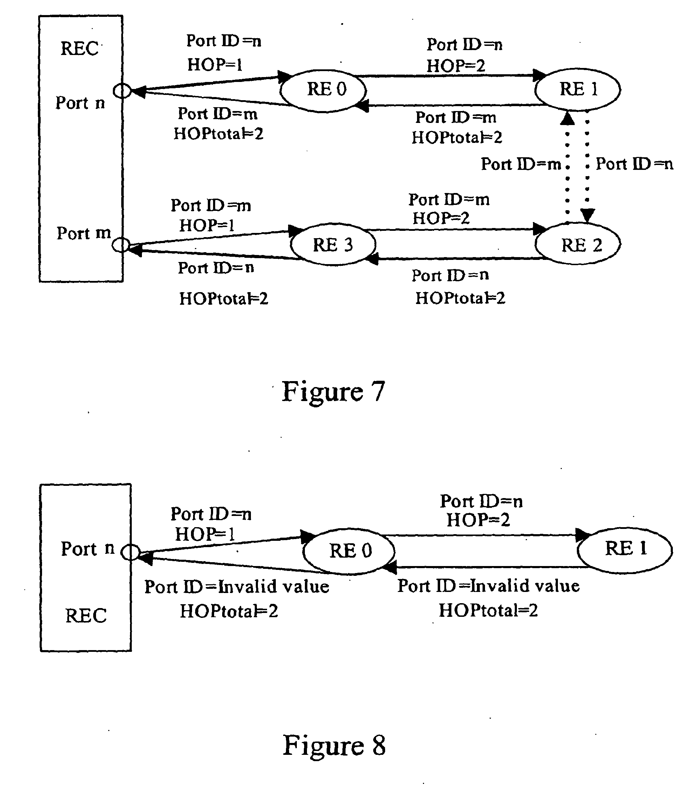

Figure 7 is a schematic of a ring networking constructing a topology according to another embodiment of the present invention.
Figure 8 is a schematic of a chain networking constructing a topology according to another embodiment of the present invention.

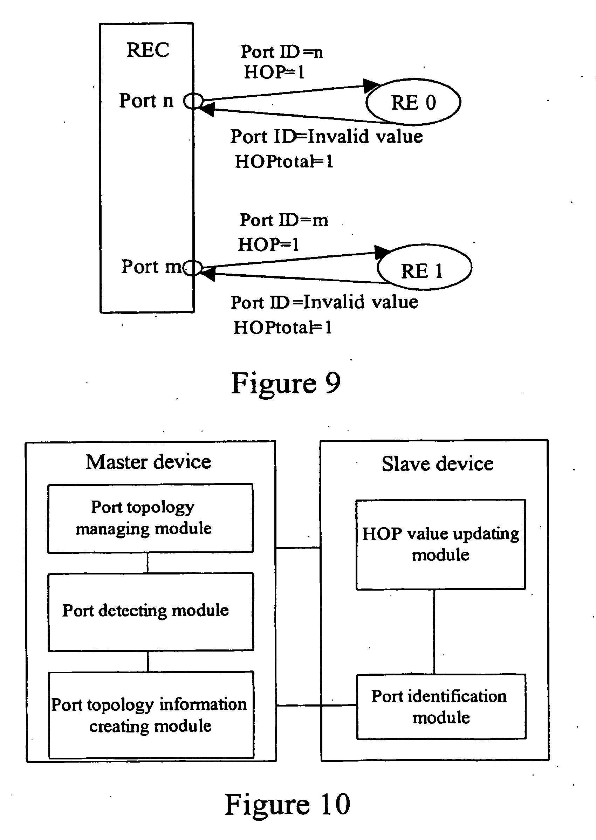

Figure 9 is a schematic of a star networking constructing a topology according to another embodiment of the present invention.
Figure 10 is a schematic of a scanning system constructing a topology according to another embodiment of the present invention.

### Detailed Description of the Invention

According to the embodiments of this invention, the Port ID field and HOP field are defined based on the existing Port ID field and HOP field shown in Table 2:

**Table 2**

| subchannel number Ns | prupose of subchannel | Xs-0 | Xs=1 | Xs=2 | Xs=3 |
|---|---|---|---|---|---|
| 0 | sync&timing | sync byte 1Q85 K28.5 | HFN | BFN-low | BFN-high |
| 1 | slowC&M | slowC&M | slowC&M | slowC&M | slowC&M |
| 2 | L0 inband prot. | version | startup | L1-reset-LOS.. | pointer p |
| 3 | reserved | reserved | reserved | reserved | reserved |
| ... | ... | ... | ... | ... | ... |
| 15 | reserved | reserved | reserved | reserved | reserved |
| 16 | Port ID | RTWP | LoESCAM | Hp/Hop total | Port Status |
| 17 | vendor specific | vendor specific | vendor specific | vendor specific | vendor specific |
| 18 | vendor specific | vendor specific | vendor specific | vendor specific | vendor specific |
| 19 | vendor specific | vendor specific | vendor specific | vendor specific | vendor specific |
| ... | ... | ... | ... | ... | ... |
| p-1 | vendor specific | reserved of vs | reserved of vs | reserved of vs | reserved of vs |
| pointer: p | faster C&M | faster C&M | faster C&M | faster C&M | faster C&M |
| ... | ... | ... | ... | ... | ... |
| 63 | faster C&M | faster C&M | fasteR C&M | faster C&M | faster C&M |

The definition of the Port ID field and HOP field in the uplink direction is the same as the definition of the Port ID field and HOP field in the downlink direction. Port Status field denotes the port status of the RE, i.e. Master or Slave, and is used in ring topology. The embodiments of this invention are provided based on the above definition of the Port ID field and HOP field.

An embodiment provided by the present invention is shown in Figure 6, and the embodiment discloses a case of one master device, a first level slave device and a second level slave device in a system for scanning topology.

In block 1, a master device sends a Port ID of its port, and an initiate HOP value to a first level slave device adjacent to the master device via a CPRI control frame.

In block 2, the first level slave device acquires the Port ID and the initiate HOP value according to the CPRI control frame received, and obtains the HOP value updated, i.e. the initiate HOP value adds a preset value or subtracts the preset value.

In block 3, the first level slave device determines whether there is a second level slave device. If there is no second level slave device, the process in block 4 is performed; if there is a second level slave device, the process in block 5 is performed.

In block 4,the first level slave device changes the Port ID to an invalid number or keeps the Port ID unchanged, sets the HOP value updated as an HOPtotal value, then returns the Port ID information and the HOPtotal value via the CPRI control frame. And the process in block 8 is performed.

In block 4, the first level slave device also can convert the HOP value updated to an operational value according to a predetermined conversion relationship, then set the HOPtotal value as the operational value, and return the HOPtotal value as the HOP value updated to the master device.

In block 5, the first level slave device detects port status of the second level slave device connected with the first level slave device. If the port status indicates Slave, the process in block 6 is performed; if the port status indicates Master, the process in block 7 is performed.

In block 6, the first level slave device sends the Port ID sent from the master device and the HOP value updated to the second level slave device via the CPRI control frame. After the first level slave device receives the Port ID and HOPtotal value returned by the second level slave device, the first level slave device returns the Port ID and HOPtotal value returned by the second level slave device to the master device via the CPRI control frame.

In block 7, the first level slave device sends the Port ID sent from the master device to the second level slave device via the CPRI control frame, the first level slave device sets the HOP value updated as an HOPtotal value, and sends the HOPtotal value and the Port ID returned by the second level slave device to the master device via the CPRI control frame.

In block 7, the first level slave device also can convert the HOP value updated into an operational value according to a predetermined conversion relationship, set the HOPtotal value as the operational value, and return the HOPtotal value as the HOP value updated to the master device.

Alternatively, in block 2 the master device may have multilevel slave devices. The slave device of every level, after receiving the CPRI control frame sent from the slave device of higher level, performs the similar processes in blocks 3-7, the detailed processes in multilevel slave device is similar to the processes in blocks 3-7, and there are no detailed descriptions for the case of multilevel slave device.

In block 8, after the CPRI control frame arrives at the master device, the master device constructs the topology according to the Port ID and the HOPtotal value contained in the CPRI frame.

When the Port ID is an invalid number or the Port ID of port receiving the CPRI control frame, and the HOPtotal value is larger than the sum of the initial HOP value and a preset value, for example, the HOPtotal value is larger than 1; or the HOPtotal value is smaller than the initial HOP value minus the preset value, for example, the HOP value is smaller then -1; then the port of the master device which has received the CPRI control frame obtains the topology information of this port according to the Port ID, and the HOPtotal value, i.e. the port determines the quantity of the slave device of lower level connected to the port in accordance with the HOPtotal value, and determines that there are no other ports of the master device which are connected with the port according to the Port ID being an invalid number. Finally, the topology of the current networking is determined as a chain structure.

When the Port ID is an invalid number or the Port ID of the port keeps unchanged, and the HOPtotal value is equal to a sum of the initial HOP value and a preset value, e.g., the preset value being equal to 1; or the HOPtotal value is equal to the initial HOP value minus the preset value, e.g., the preset value being equal to -1; then the port in the master device, which has received the CPRI control frame, obtains the topology information of the port in accordance with the Port ID and the HOPtotal value, i.e. determines that the quantity of the slave device connected to the port is one in accordance with the Port ID, and determines that there are no other ports of the slave device which are connected with the port according to the Port ID of the port which is an invalid number or keeps unchanged. Finally, the topology of the current networking is determined as a star structure or a chain structure.

When the Port ID is not the valid number of the port, then the port in the master device, which has received the CPRI control frame, obtains the topology information of the port according to the Port ID, and the HOPtotal value, i.e. determines which port of the slave device is connected with the port according to the Port ID, and determines the quantity of the slave device connected to the port according to the HOPtotal value. Finally, the topology of the current networking is determined as a ring structure.

The following embodiments of the present invention describe an REC and a plurality of REs forming a ring topology, chain topology, and star topology.

At present, the status of port controlled by the master device indicates Slave, and the status of port controlling the slave device of lower level connected with the master device indicates Master.

If one REC and four REs form a ring topology in another embodiment of present invention shown in Figure 7, the master device REC respectively sends a CPRI control frame via each port, and the CPRI control frame carries the Port ID of the port and the initial HOP value, and it is supposed here that the initial HOP value is 0.

A description of the method for scanning topology according to the abovementioned embodiment of this invention is given as follows by taking the port n as an example. The REC sends the CPRI control frame via the port n, i.e. the Port ID of port n is n, and the CPRI control frame carries the Port ID, n, and initial HOP value, 0. After RE0 receives the CPRI control frame, the RE0 obtains the Port ID n and initial HOP value according to the CPRI control frame, and obtains the HOP value updated, i.e. adds 1 to the initiate HOP value. Then RE0 detects whether there is any slave device of lower level, after detect that there is a slave device of lower level RE1, RE0 detects the port status of the port of RE1; if the port status of RE1 indicates Slave, RE0 sends the Port ID, n, and the HOP value updated to the RElvia the CPRI control frame. After the CPRI control frame arrives at RE1, RE1 updates the HOP value received, and the HOP value is equal to 2 at shat time; then, RE1 detects whether there is any slave device of lower level; if detect that there is a slave device of lower level RE2, RE1 detects the port status RE2; and when RE1 detects that the port status of RE2 indicates Master, RE1 sends the number of the port, n, to the RE2 via the CPRI control frame, and RE2 sends the Port ID, i.e. the Port ID, m, to the slave device of higher level RE1 via the CPRI control frame. RE1 sets the HOPtotal value to the HOP value updated, and sends the HOPtotal value and the number of port, m, sent from the RE2 to the RE0 via the CPRI control frame.

After the HOPtotal value and Port ID sent from RE1 arrives at the slave device of higher level RE0, RE0 directly sends the CPRI control frame to the port n of the master device REC with the HOPtotal value and Port ID unchanged.

The master device learns that the quantity of RE connected to port n is two according to the HOPtotal value received by port n, and the HOPtotal value is equal to two. The master device obtains that another master port, port m, in the master device, is connected to port n according to the Port ID received by port n. And the number of the Port ID received by port n is equal to m.

Similarly, port m of the master device will obtain the quantity of the RE connected to port m is 2, and the port connected to port m is port n according to the HOP value received being equal to 2, and Port ID indicating n.

Then, the master device REC can, according to the information obtained by port n and port m, construct the current networking with the current topology as ring topology.

If REC and two REs form a ring topology in another embodiment of present invention shown in Figure 8, the REC sends Port ID, and the initial HOP value via the CPRI control frame. It is supposed here that the Port LID is the number of port, n, and the initial HOP value is 0.

After RE0 receives the CPRI control frame, it obtains Port ID and HOP value from the CPRI control frame, and obtains the HOP value updated, i.e. adds 1 to the HOP value, then RE0 detects whether there is any slave device of lower level; after detect that there is a slave device of lower level RE1, RE0 detects the port status of the RE1; if the port status of RE1 indicates Slave, RE0 sends the port number n, and the HOP value updated (HOP value is equal to 1) to the RE1 via the CPRI control frame.

After the CPRI control frame arrives at RE1, RE1, according to the CPRI control frame, acquires Port ID and HOP value, and obtains the HOP value updated, i.e. adds 1 to the HOP value, and the HOP value becomes 2; then RE1 detects whether there is any slave device of lower level device; after detect that there is no slave device of lower level, RE1 sets Port ID to an invalid number, and at the same time RE1 sets the HOPtotal value to the HOP value updated, and returns Port ID and HOPtotal value updated (HOPtotal value is equal to 2) to RE0 via the CPRI control frame.

After RE0 receives the CPRI control frame returned by RE1, RE0 directly sends the CPRI control frame to the port n of the master device REC, and the HOPtotal value and Port ID in the CPRI control frame keep unchanged.

The REC receives the CPRI control frame at port n. The REC determines that the quantity of the RE connected to port n is 2 according to the HOPtotal value carried in the CPRI control frame returned by RE0. The REC, according to the Port ID received by port n, determines that there is no port in the master device connected with port n, and determines that the current topology is a chain topology.

In another embodiment of present invention shown in Figure 9, the REC and two REs form a star topology.

The REC sends CPRI control frames in port n and port m respectively, and each CPRI control frame carries the Port ID and the initial HOP value, and the initial HOP value is 0.

The process of transferring the CPRI control frame is described as follows by taking the port n as an example; the Port ID of the port n is equal to n. The REC sends the Port ID, n, and the initial HOP value, 0, via the CPRI control frame.

After the CPRI control frame is received by RE0, RE0, according to the CPRI control frame received, obtains the Port ID and the initial HOP value, and obtains the HOP value updated, i.e. adds 1 to the initiate HOP value; then RE0 detects whether there is any slave device of lower level; if there is no slave device of lower level, RE0 sets Port ID to an invalid number, and at the same time RE0 sets the HOPtotal to the HOP value updated, and returns Port ID and HOPtotal value (HOPtotal value is equal to 1) to REC via the CPRI control frame.

After the port n of the REC receives the CPRI control frame returned by RE0, the REC, according to the HOPtotal value carried in the CPRI control frame, determines that the quantity of the RE connected to port n is 1, and determines that no other ports in the master device are connected to port n according to the Port ID which is equal to an invalid number.

Similarly, the port m of the REC will receive the CPRI control frame returned by RE1; the REC determines that the quantity of the RE connected to the port m is 1, and determines that in the master device there are no other ports connected to port m.

The REC determines that the topology of the current networking is a star topology according to the topology information of port n and the topology information of port m.

The forth embodiment of this invention includes the following processes: each port of the master device obtains its topology information according to the Port ID received and HOPtotal value received, then compares the topology information of the port with the topology information previously obtained; if the topology information of the port has changed, the port reports the topology information of the port currently obtained to the master device; then the master device constructs the topology of the current networking according to the topology information submitted by every port. The implementing processes include:
firstly, a port of the master device sends a CPRI control frame, and waits to receive the CPRI control frame returned by the slave device of lower level;
and, after the CPRI control frame arrives at the master device, the port which has received the CPRI control frame, will determine the topology information of the port according to the Port ID carried in the CPRI control frame and an HOPtotal value, i.e. determine the quantity of the RE connected to the port according to the HOPtotal value, and determines whether there are any other ports connected with the port according to the Port ID;
then, the port compares the topology information of the port with the topology information previously obtained; after detect that the topology information has changed, the port reports the topology information of the port to the master device;
finally, the master device determines the topology of the current networking according to the topology information submitted by every port.

Another embodiment of the invention describes a system for scanning topology as shown in Figure 10, and the embodiment includes the following processes.

Each port of the master device is provided with a port detecting module, a port topology managing module and a port topology information creating module. And the slave device includes a HOP value updating module and a Port identification module.

Each port of the master device sends its Port ID and initial HOP value via a CPRI control frame.

After receiving the Port ID and initiate HOP value, the slave device of lower level updates the initiate HOP value received via the HOP value updating module, and obtains the HOP value updated; then, the Port identification module in the slave device of lower level detects whether there is another slave device of lower level connected to the slave device of lower level; if there is no another slave device of lower level, then the slave device of lower level sets the HOP value updated by the HOP value updating module as an HOPtotal value, or converts the HOP value updated to an operational value according to a predetermined conversion relationship, and sets the HOPtotal value as the operational value, and then returns the HOPtotal value and the Port ID to the slave device of higher level; if the Port identification module determines that there is another slave device of lower level, the Port identification module detects the port status of another slave device of lower level, if the port status of another slave device of lower level indicates Slave, the Port identification module sends the Port ID sent from the slave device of higher level, and the HOP value updated by the HOP value updating module to the another slave device of lower level, then returns the HOPtotal value and the Port ID returned by the another slave device of lower level to the slave device of higher level, then returns the HOPtotal value and the Port ID returned by the another slave device of lower level to the slave device of higher level; and if the port status of the another slave device of lower level indicates Master, the Port identification module sends the Port ID to the another slave device of lower level, and sets the HOP value updated by the HOP value updating module as the HOPtotal value, or converts the HOP value updated to an operational value according to a predetermined conversion relationship, and sets the HOPtotal value as the operational value, and then returns the HOPtotal value and the Port ID returned from the another slave device of lower level to the slave device of higher level.

After the CPRI control frame arrives at the master device, the port topology information creating module collects the Port ID received by the port where the port topology information creating module is located and the HOPtotal value, and creates the topology information of the port according to the Port ID and HOPtotal value; then, the port topology information creating module, via the port detecting module, detects whether the topology information of the port has changed, and if the topology information of the port has been changed, the port topology information creating module submits the detecting information to the port topology managing module. The port topology managing module creates the topology of the current networking according to the port topology information created by the port topology information creating module of every port.

For example, if the Port ID received by the port n is m last time, and the Port ID received by the port n this time is p, then the port detecting module can detect that the port at another end in master device has been changed, and then initiatively reports the information of port number at another end being changed to the port topology information creating module. The port topology information creating module creates the topology of this port and reports topology information to the port topology managing module. The port topology managing module creates the topology of the current networking according to topology information created by the port topology information creating module of every port, and displays the topology via the Operation and Maintenance Center /Local Maintenance Terminal (OMC/LMT). In this way, the Plug and Play function is implemented; in the case that network topology is changed from chain topology to ring topology or in reverse, the system can automatically find the change according to the Port ID and HOPtotal value acquired by the port. The physical layer information transfer can be adopted in the embodiment of this invention, whereby the response speed of the network topology scanning is very fast.

Another embodiment of the present invention is provided in the following description, the difference between this embodiment and the abovementioned embodiment mainly includes the following.

There is no port detecting module in this embodiment. The port topology information creating module submits the topology information of the port directly to the port topology managing module. Then, the port topology managing module constructs the topology of the current networking according to the topology information created by the port topology information creating module of every port.

The master device in the embodiments of this invention can obtain port information and slave node information via an automatic topology scanning, so the master device can construct a topology for connecting the master device and the slave device. Each port of the master device respectively sends the Port ID and initial HOP value to the slave device of lower level adjacent to the master device; the slave device of lower level updates the HOP value received, and sends the Port ID received and the HOP value updated according to the status of the slave device of lower level, whereby each port of the master device will receive the Port ID and the HOP value sent from the slave device thereof, and can perform the scanning of the topology according to the Port ID received by every port thereof, and the HOP value. Thus, the master device in the embodiments of this invention can implement the function for the automatic scanning of the topology as well as Plug and Play function, and can reduce the amount of data configuration work, thereby reducing the amount of network maintenance work.

The present invention relates to a computer program product for constructing a topology. The computer program product includes computer program code portions configured to realize one or more parts and/or functions of the inventive master device, when the computer program code portions are run on a computing device. For example, computer program code parts, when run on the computing device, may realize one or more parts and functions of one or more of the port topology information creating module, the port topology managing module and the port detecting module.

Further, the present invention also relates to another computer program product for constructing a topology. The another computer program product includes computer program code portions configured to realize one or more parts and/or functions of the inventive slave device, when the computer program code portions are run on a computing device. For example, computer program code parts, when run on the computing device, may realize one or more parts and functions of one or more of the HOP value updating module, the Port identification module.

The above mentioned computer program products may be stored on a computer-readable medium, such as a read-only memory (ROM), a random-access memory (RAM) or a flash memory. It should be understood that computer program code portions may be loaded to the computing device via a suitable data network and that the loaded computer program code portions may replace or update possible existing computer program code portions.

The above are only preferred embodiments of this invention. The protection scope of this invention, however, is not limited to the above description. Any modification or substitution, within the technical scope disclosed by this invention, easily occurring to those skilled in the art should be covered by the protection scope of this invention. Therefore, the protection scope of the present invention should be determined according to the following claims.

## Claims

1. A method for constructing a topology information, consisting in processes of:
sending, by each port of a master device, a first Port ID of the port and an initial HOP value to a slave device;
determining whether there is a next level device connected with the slave device;
if there is no next level device connected with the slave device, setting, by the slave device, the first Port ID to an invalid number or keeping, by the slave device, the first Port ID unchanged, updating, by the slave device, the HOP value and setting, by the slave device, the updated HOP value as an HOPtotal value, and returning, by the slave device, the HOPtotal value and the first Port ID to the master device;
if there is a next level device connected with the slave device, detecting port status of the next level device;
if port status of the next level device connected with the slave device is Master, sending, by the slave device, the first Port ID to the next level device, updating, by the slave device, the HOP value and setting, by the slave device, the updated HOP value as an HOPtotal value, and returning, by the slave device, the HOPtotal value and a second Port ID returned by the next level device to the master device;
if port status of the next level device connected with the slave device is Slave, updating, by the slave device, the HOP value, sending, by the slave device, the first Port ID and the updated HOP value to the next level device, the next level device turns to the determining step, and
constructing, by the master device, topology information indicating a connection between the master device and the slave device according to the received Port ID and the received HOPtotal value received by the each port of the master device;
wherein the topology structure is ring, chain or star.

2. The method of Claim 1, **characterised in, that** the sending by each port of the master device the first Port ID and the initial HOP value to the slave device comprises:
sending, by each port of the master device, the first Port ID and the initial HOP value to the slave device through a Common Public Radio Interface, CPRI, control frame.

3. The method of Claim 1, **characterised in**, the setting the updated HOP value as an HOPtotal value comprises:
setting the updated HOP value as an HOPtotal value directly; or
converting the updated HOP value to an operational value according to a predetermined conversion relationship and setting the operational value as the HOPtotal value.

4. The method of Claim 3, **characterised in, that** the constructing by the master device the topology information indicating the connection between the master device and the slave device according to the received Port ID and the received updated HOP value received by each port of the master device comprises:
obtaining, by the each port of the master device, the topology information of the each port according to the received Port ID and the HOPtotal value, in response to receiving the Port ID and the HOPtotal value from the slave device; or
determining, by the each port of the master device, the second port ID of the each port of the master device according to the received Port ID in response to receiving the Port ID and the HOPtotal value from the slave device, and obtaining a quantity of the slave device connected with the master device according to the HOPtotal value, obtaining the topology information according to quantity of the slave device and the second ID of the each port of the master device; or
determining, by each port of the master device, the second port ID of the each port of the master device according to the received Port ID in response to receiving the Port ID and the HOPtotal value from the slave device, making a calculation to the HOPtotal value according to the predetermined conversion relationship, and obtaining the quantity of the slave device connected with the master device according to a calculation result, obtaining the topology information according to quantity of the slave device and the second ID of the each port of the master device.

5. The method of Claim 1, **characterised in**, further comprising:
receiving, by the port of the master device, the topology information if the port of the master device detects the topology information is changed; and
constructing, by the master device, the topology information of a networking according to the topology information submitted.

6. A slave device for constructing topology information comprising an HOP value updating module and a Port identification module, where in, the HOP value updating module is configured to update a received HOP value in response to receive a HOP value from a master device or a previous level slave device; and
the Port identification module is configured to
if there is no next level device connected with the slave device, set the first Port ID to an invalid number or keep the first Port ID unchanged, update the HOP value and set the updated HOP value as an HOPtotal value, and return the HOPtotal value and the first Port ID to the master device;
if port status of the next level device connected with the slave device is Master, send the first Port ID to the next level device connected with the slave device, update the HOP value and set the updated HOP value as an HOPtotal value, and return the HOPtotal value and a second Port ID returned by the next level device to the master device;
if port status of the next level device connected with the slave device is Slave, update the HOP value, send the first Port ID and the updated HOP value to the next level device.

7. The slave device of Claim 6, **characterised in, that** the Port identification module is further configured to
set the updated HOP value as an HOPtotal value directly; or
convert the updated HOP value to an operational value according to a predetermined conversion relationship and set the operational value as the HOPtotal value.

8. A master device for constructing topology information the master device comprises:
a sending module provided at each port of the master device, configured to send a first Port ID of the port and an initial HOP value to a slave device according to claim 6 or 7,
a port topology information creating module provided at each port of the master device, configured to collect a Port ID and an HOPtotal value returned by said slave device, construct a topology information of the port according to the Port ID and the HOPtotal value.

9. The master device of Claim 8, **characterised in**, further comprising:
a port topology managing module, configured to create the topology of networking according to the topology information created by each of the port topology information creating module.

10. The master device of Claim 9, **characterised in**, further comprising:
a port detecting module provided at each port of the master device, configured to submit the topology information of the port to the port topology managing module, if the topology information of the port which is created by the port topology information creating module is changed.

11. A system for constructing topology information, comprising a master device and a slave device connected with the master device, the master device is configured to send a first Port ID and an initial HOP value of each port to the slave device, and constructs topology information indicating a connection between the master device and the slave device according to the received Port ID and the received HOPtotal value received by the each port;
if there is no next level device connected with the slave device, the slave device is configured to set the first Port ID to an invalid number or keep the first Port ID unchanged, update the HOP value and set the updated HOP value as an HOPtotal value, and return the HOPtotal value and the first Port ID to the master device;
if a port status of the next level device connected with the slave device is Master, the slave device is configured to send the first Port ID to the next level device, update the HOP value and set the updated HOP value as an HOPtotal value, and return the HOPtotal value and a second Port ID returned by the next level device to the master device;
if port status of the next level device connected with the slave device is Slave, the slave device is configured to update the HOP value, send the first Port ID and the updated HOP value to the next level device.

## Patentansprüche

1. Verfahren zum Konstruieren einer Topologieinformation, bestehend aus den folgenden Prozessen:
jeder Port einer Master-Einrichtung sendet eine erste Port-ID des Ports und einen anfänglichen HOP-Wert zu einer Slave-Einrichtung;
es wird bestimmt, ob eine mit der Slave-Einrichtung verbundene Einrichtung der nächsten Ebene vorliegt;
wenn keine mit der Slave-Einrichtung verbundene Einrichtung der nächsten Ebene vorliegt, setzt die Slave-Einrichtung die erste Port-ID auf eine ungültige Nummer oder hält die Slave-Einrichtung die erste Port-ID unverändert,
aktualisiert die Slave-Einrichtung den HOP-Wert und setzt die Slave-Einrichtung den aktualisierten HOP-Wert als einen HOPtotal-Wert und gibt die Slave-Einrichtung den HOPtotal-Wert und die erste Port-ID zu der Master-Einrichtung zurück;
wenn eine mit der Slave-Einrichtung verbundene Einrichtung der nächsten Ebene vorliegt, wird der Portstatus der Einrichtung der nächsten Ebene detektiert;
wenn der Portstatus der mit der Slave-Einrichtung verbundenen Einrichtung der nächsten Ebene Master ist, sendet die Slave-Einrichtung die erste Port-ID zu der Einrichtung der nächsten Ebene, aktualisiert die Slave-Einrichtung den HOP-Wert und setzt die Slave-Einrichtung den aktualisierten HOP-Wert als einen HOPtotal-Wert und gibt die Slave-Einrichtung den HOPtotal-Wert und
eine von der Einrichtung der nächsten Ebene zurückgegebene zweite Port-ID an die Master-Einrichtung zurück;
wenn der Portstatus der mit der Slave-Einrichtung verbundenen Einrichtung der nächsten Ebene Slave ist, aktualisiert die Slave-Einrichtung den HOP-Wert,
sendet die Slave-Einrichtung die erste Port-ID und den aktualisierten HOP-Wert zu der Einrichtung der nächsten Ebene, und die Einrichtung der nächsten Ebene geht zum Bestimmungsschritt über und
die Master-Einrichtung konstruiert Topologieinformationen, die eine Verbindung zwischen der Master-Einrichtung und der Slave-Einrichtung angeben, gemäß der empfangenen Port-ID und dem empfangenen HOPtotal-Wert, der durch jeden Port der Master-Einrichtung empfangen wird;
wobei die Topologiestruktur Ring, Kette oder Stern ist.

2. Verfahren nach Anspruch 1, **dadurch gekennzeichnet, dass** das Senden der ersten Port-ID und des anfänglichen HOP-Werts zu der Slave-Einrichtung durch jeden Port der Master-Einrichtung Folgendes umfasst:
jeder Port der Master-Einrichtung sendet die erste Port-ID und den anfänglichen HOP-Wert durch einen Steuerrahmen der Common Public Radio Interface CPRI zu der Slave-Einrichtung.

3. Verfahren nach Anspruch 1, **dadurch gekennzeichnet, dass** das Setzen des aktualisierten HOP-Werts als einen HOPtotal-Wert Folgendes umfasst:
direktes Setzen des aktualisierten HOP-Werts als einen HOPtotal-Wert; oder
Umsetzen des aktualisierten HOP-Werts in einen operationalen Wert gemäß einer vorbestimmten Umsetzungsbeziehung und Setzen des operationalen Werts als den HOPtotal-Wert.

4. Verfahren nach Anspruch 3, **dadurch gekennzeichnet, dass** das Konstruieren der Topologieinformationen, die die Verbindung zwischen der Master-Einrichtung und der Slave-Einrichtung angeben, gemäß der empfangenen Port-ID und dem empfangenen aktualisierten HOP-Wert, die durch jeden Port der Master-Einrichtung empfangen werden, durch die Master-Einrichtung Folgendes umfasst:
jeder Port der Master-Einrichtung erhält die Topologieinformationen jedes Ports gemäß der empfangenen Port-ID und dem HOPtotal-Wert als Reaktion auf den Empfang der Port-ID und des HOPtotal-Werts von der Slave-Einrichtung; oder
jeder Port der Master-Einrichtung bestimmt die zweite Port-ID jedes Ports der Master-Einrichtung gemäß der empfangenen Port-ID als Reaktion auf den Empfang der Port-ID und des HOPtotal-Werts von der Slave-Einrichtung und
es werden gemäß dem HOPtotal-Wert eine Quantität der mit der Master-Einrichtung verbundenen Slave-Einrichtung und gemäß der Quantität der Slave-Einrichtung und der zweiten ID jedes Ports der Master-Einrichtung die Topologieinformationen erhalten; oder
jeder Port der Master-Einrichtung bestimmt die zweite Port-ID jedes Ports der Master-Einrichtung gemäß der empfangenen Port-ID als Reaktion auf den Empfang der Port-ID und des HOPtotal-Werts von der Slave-Einrichtung und
es wird eine Berechnung des HOPtotal-Werts gemäß der vorbestimmten Umsetzungsbeziehung durchgeführt und es werden gemäß einem Berechnungsergebnis die Quantität der mit der Master-Einrichtung verbundenen Slave-Einrichtung und gemäß der Quantität der Slave-Einrichtung und der zweiten ID jedes Ports der Master-Einrichtung die Topologieinformationen erhalten.

5. Verfahren nach Anspruch 1, **dadurch gekennzeichnet, dass** es ferner Folgendes umfasst:
der Port der Master-Einrichtung empfängt die Topologieinformationen, wenn der Port der Master-Einrichtung detektiert, dass die Topologieinformationen geändert sind; und
die Master-Einrichtung konstruiert die Topologieinformationen einer Vernetzung gemäß den übergebenen Topologieinformationen.

6. Slave-Einrichtung zum Konstruieren von Topologieinformationen, umfassend ein HOP-Wertaktualisierungsmodul und ein Portidentifikationsmodul, wobei das HOP-Wertaktualisierungsmodul dafür ausgelegt ist, als Reaktion auf den Empfang eines HOP-Werts von einer Master-Einrichtung oder einer Slave-Einrichtung der vorherigen Ebene einen empfangenen HOP-Wert zu aktualisieren; und
wobei das Portidentifikationsmodul für Folgendes ausgelegt ist:
wenn keine mit der Slave-Einrichtung verbundene Einrichtung der nächsten Ebene vorliegt, Setzen der ersten Port-ID auf eine ungültige Nummer oder Unveränderthalten der ersten Port-ID, Aktualisieren des HOP-Werts und Setzen des aktualisierten HOP-Werts als einen HOPtotal-Wert und Zurückgeben des HOPtotal-Werts und der ersten Port-ID an die Master-Einrichtung;
wenn der Portstatus der mit der Slave-Einrichtung verbundenen Einrichtung der nächsten Ebene Master ist, Senden der ersten Port-ID zu der mit der Slave-Einrichtung verbundenen Einrichtung der nächsten Ebene, Aktualisieren des HOP-Werts und Setzen des aktualisierten HOP-Werts als einen HOPtotal-Wert und Zurückgeben des HOPtotal-Werts und einer von der Einrichtung der nächsten Ebene zurückgegebenen zweiten Port-ID an die Master-Einrichtung;
wenn der Portstatus der mit der Slave-Einrichtung verbundenen Einrichtung der nächsten Ebene Slave ist, Aktualisieren des HOP-Werts und Senden der ersten Port-ID und des aktualisierten HOP-Werts zu der Einrichtung der nächsten Ebene.

7. Slave-Einrichtung nach Anspruch 6, **dadurch gekennzeichnet, dass** das Portidentifikationsmodul ferner für Folgendes ausgelegt ist:
direktes Setzen des aktualisierten HOP-Werts als einen HOPtotal-Wert; oder
Umsetzen des aktualisierten HOP-Werts in einen operationalen Wert gemäß einer vorbestimmten Umsetzungsbeziehung und Setzen des operationalen Werts als den HOPtotal-Wert.

8. Master-Einrichtung zum Konstruieren von Topologieinformationen, wobei die Master-Einrichtung Folgendes umfasst:
ein an jedem Port der Master-Einrichtung vorgesehenes Sendemodul, das dafür ausgelegt ist, eine erste Port-ID des Ports und einen anfänglichen HOP-Wert zu einer Slave-Einrichtung nach Anspruch 6 oder 7 zu senden,
ein an jedem Port der Master-Einrichtung vorgesehenes Porttopologieinformations-Erzeugungsmodul, das dafür ausgelegt ist, eine Port-ID und einen HOPtotal-Wert, die von der Slave-Einrichtung zurückgegeben werden, zu sammeln und gemäß der Port-ID und dem HOPtotal-Wert eine Topologieinformation des Ports zu konstruieren.

9. Master-Einrichtung nach Anspruch 8, **dadurch gekennzeichnet, dass** sie ferner Folgendes umfasst:
ein Porttopologie-Verwaltungsmodul, das dafür ausgelegt ist, die Topologie der Vernetzung gemäß den durch jedes Topologieinformations-Erzeugungsmodul erzeugten Topologieinformationen zu erzeugen.

10. Master-Einrichtung nach Anspruch 9, **dadurch gekennzeichnet, dass** sie ferner Folgendes umfasst:
ein an jedem Port der Master-Einrichtung vorgesehenes Portdetektionsmodul, das dafür ausgelegt ist, die Topologieinformationen des Ports an das Porttopologie-Verwaltungsmodul zu übergeben, wenn die Topologieinformationen des Ports, die durch das Porttopologieinformations-Erzeugungsmodul erzeugt werden, geändert sind.

11. System zum Konstruieren von Topologieinformationen, umfassend eine Master-Einrichtung und eine mit der Master-Einrichtung verbundene Slave-Einrichtung, wobei die Master-Einrichtung dafür ausgelegt ist, eine erste Port-ID und einen anfänglichen HOP-Wert jedes Ports zu der Slave-Einrichtung zu senden, und gemäß der empfangenen Port-ID und dem empfangenen HOPtotal-Wert, die durch jeden Port empfangen werden, Topologieinformationen konstruiert, die eine Verbindung zwischen der Master-Einrichtung und der Slave-Einrichtung angeben;
wobei, wenn keine mit der Slave-Einrichtung verbundene Einrichtung der nächsten Ebene vorliegt, die Slave-Einrichtung dafür ausgelegt ist, die erste Port-ID auf eine ungültige Nummer zu setzen oder die erste Port-ID ungeändert zu halten, den HOP-Wert zu aktualisieren und den aktualisierten HOP-Wert als einen HOPtotal-Wert zu setzen und den HOPtotal-Wert und die erste Port-ID an die Master-Einrichtung zurückzugeben;
wobei, wenn ein Portstatus der mit der Slave-Einrichtung verbundenen Einrichtung der nächsten Ebene Master ist, die Slave-Einrichtung dafür ausgelegt ist, die erste Port-ID zu der Einrichtung der nächsten Ebene zu senden, den HOP-Wert zu aktualisieren und den aktualisierten HOP-Wert als einen HOPtotal-Wert zu setzen und den HOPtotal-Wert und eine von der Einrichtung der nächsten Ebene zurückgegebene zweite Port-ID an die Master-Einrichtung zurückzugeben;
wobei, wenn der Portstatus der mit der Slave-Einrichtung verbundenen Einrichtung der nächsten Ebene Slave ist, die Slave-Einrichtung dafür ausgelegt ist, den HOP-Wert zu aktualisieren und die erste Port-ID und den aktualisierten HOP-Wert zu der Einrichtung der nächsten Ebene zu senden.

## Revendications

1. Procédé de construction d'informations topologiques, consistant en les processus suivants :
envoi, par chaque port d'un dispositif maître, d'une première ID de Port du port et d'une valeur de BOND initiale à un dispositif esclave ;
détermination si un dispositif de niveau suivant est connecté ou non au dispositif esclave ;
si aucun dispositif de niveau suivant n'est connecté au dispositif esclave, le réglage, par le dispositif esclave, de la première ID de Port sur un numéro non valable ou le maintien, par le dispositif esclave, de la première ID de Port inchangée, l'actualisation, par le dispositif esclave, de la valeur de BOND et le réglage, par le dispositif esclave, de la valeur de BOND actualisée comme valeur de BOND totale, et le renvoi, par le dispositif esclave, de la valeur de BOND totale et de la première ID de port au dispositif maître ;
si un dispositif de niveau suivant est connecté au dispositif esclave, la détection de l'état de port du dispositif de niveau suivant ;
si l'état de port du dispositif de niveau suivant connecté au dispositif esclave est Maître, l'envoi, par le dispositif esclave, de la première ID de Port au dispositif de niveau suivant, l'actualisation, par le dispositif esclave, de la valeur de BOND et le réglage, par le dispositif esclave, de la valeur de BOND actualisée comme valeur de BOND totale, et le renvoi, par le dispositif esclave, de la valeur de BOND totale et d'une seconde ID de Port renvoyée par le dispositif de niveau suivant au dispositif maître ;
si l'état de port du dispositif de niveau suivant connecté au dispositif esclave est Esclave, l'actualisation, par le dispositif esclave, de la valeur de BOND, l'envoi,
par le dispositif esclave, de la première ID de Port et de la valeur de BOND actualisée au dispositif de niveau suivant, le passage par le dispositif de niveau suivant à l'étape de détermination, et
la construction, par le dispositif maître, d'informations de topologie indiquant une connexion entre le dispositif maître et le dispositif esclave en fonction de l'ID de Port reçue et de la valeur de BOND totale reçue reçues par chaque port du dispositif maître ;
dans lequel la structure topologique est un anneau, une chaîne ou une étoile.

2. Procédé selon la revendication 1, **caractérisé en ce que** l'envoi par chaque port du dispositif maître de la première ID de Port et de la valeur de BOND initiale au dispositif esclave comprend :
l'envoi, par chaque port du dispositif maître, de la première ID de Port et de la valeur de BOND initiale au dispositif esclave par le biais d'une trame de commande d'une Interface Radio Publique Commune, CPRI.

3. Procédé selon la revendication 1, **caractérisé en ce que** le réglage de la valeur de BOND actualisée comme valeur de BOND totale comprend :
le réglage de la valeur de BOND actualisée comme valeur de BOND totale directement ; ou
la conversion de la valeur de BOND actualisée en une valeur opérationnelle en fonction d'une relation de conversion prédéterminée et le réglage de la valeur opérationnelle comme valeur de BOND totale.

4. Procédé selon la revendication 3, **caractérisé en ce que** la construction par le dispositif maître des informations topologiques indiquant la connexion entre le dispositif maître et le dispositif esclave en fonction de l'ID de Port reçue et de la valeur de BOND actualisée reçue reçues par chaque port du dispositif maître comprend :
l'obtention, par chaque port du dispositif maître, des informations topologiques de chaque port en fonction de l'ID de Port reçue et de la valeur de BOND totale reçue, en réponse à la réception de l'ID de Port et de la valeur de BOND totale depuis le dispositif esclave ; ou
la détermination, par chaque port du dispositif maître, de la seconde ID de port de chaque port du dispositif maître en fonction de l'ID de Port reçue en réponse à la réception de l'ID de Port et de la valeur de BOND totale depuis le dispositif esclave, et l'obtention d'une quantité du dispositif esclave connecté au dispositif maître en fonction de la valeur de BOND totale, l'obtention des informations topologiques en fonction de la quantité du dispositif esclave et de la seconde ID de chaque port du dispositif maître ; ou
la détermination, par chaque port du dispositif maître, de la seconde ID de port de chaque port du dispositif maître en fonction de l'ID de Port reçue en réponse à la réception de l'ID de Port et de la valeur de BOND totale depuis le dispositif esclave, l'exécution d'un calcul de la valeur de BOND totale en fonction de la relation de conversion prédéterminée, et l'obtention de la quantité du dispositif esclave connecté au dispositif maître en fonction d'un résultat de calcul,
l'obtention des informations topologiques en fonction de la quantité du dispositif esclave et de la seconde ID de chaque port du dispositif maître.

5. Procédé selon la revendication 1, **caractérisé en ce qu'**il comprend en outre :
la réception, par le port du dispositif maître, des informations topologiques si le port du dispositif maître détecte que les informations topologiques ont changé ; et
la construction, par le dispositif maître, des informations topologiques d'un réseau en fonction des informations topologiques soumises.

6. Dispositif esclave de construction d'informations topologiques comprenant un module d'actualisation de valeur de BOND et un module d'identification de Port, le module d'actualisation de valeur de BOND étant configuré pour actualiser une valeur de BOND reçue en réponse à la réception d'une valeur de BOND depuis un dispositif maître ou d'un dispositif esclave de niveau précédent ; et
le module d'identification de Port étant configuré pour
si aucun dispositif de niveau suivant n'est connecté au dispositif esclave, régler la première ID de Port sur un numéro non valable ou maintenir la première ID de Port inchangée, actualiser la valeur de BOND et régler la valeur de BOND actualisée comme valeur de BOND totale, et renvoyer la valeur de BOND totale et la première ID de port au dispositif maître ;
si l'état de port du dispositif de niveau suivant connecté au dispositif esclave est Maître, envoyer la première ID de port au dispositif de niveau suivant connecté au dispositif esclave, actualiser la valeur de BOND et régler la valeur de BOND actualisée comme valeur de BOND totale, et renvoyer la valeur de BOND totale et une seconde ID de Port renvoyée par le dispositif de niveau suivant au dispositif maître ;
si l'état de port du dispositif de niveau suivant connecté au dispositif esclave est Esclave, actualiser la valeur de BOND, envoyer la première ID de Port et la valeur de BOND actualisée au dispositif de niveau suivant.

7. Dispositif esclave selon la revendication 6, **caractérisé en ce que** le module d'identification de Port est en outre configuré pour
régler la valeur de BOND actualisée comme valeur de BOND totale directement ; ou
convertir la valeur de BOND actualisée en une valeur opérationnelle en fonction d'une relation de conversion prédéterminée et régler la valeur opérationnelle comme valeur de BOND totale.

8. Dispositif maître de construction d'informations topologiques, le dispositif maître comprenant :
un module d'envoi fourni à chaque port du dispositif maître, configuré pour envoyer une première ID de Port du port et une valeur de BOND initiale à un dispositif esclave en fonction de la revendication 6 ou 7,
un module de création d'informations topologiques de port fourni à chaque port du dispositif maître, configuré pour collecter une ID de Port et une valeur de BOND totale renvoyées par ledit dispositif esclave, construire une information topologique du port en fonction de l'ID du Port et de la valeur de BOND totale.

9. Dispositif maître selon la revendication 8, **caractérisé en ce qu'**il comprend en outre :
un module de gestion de topologie de port, configuré pour créer la topologie de réseau en fonction des informations topologiques créées par le module de création d'informations topologiques de port.

10. Dispositif maître selon la revendication 9, **caractérisé en ce qu'**il comprend en outre :
un module de détection de port fourni à chaque port du dispositif maître, configuré pour soumettre les informations topologiques du port au module de gestion de topologie de port, si les informations topologiques du port qui sont créées par le module de création d'informations topologiques de port ont changé.

11. Système de construction d'informations topologiques, comprenant un dispositif maître et un dispositif esclave connecté au dispositif maître, le dispositif maître étant configuré pour envoyer une première ID de Port et une valeur de BOND initiale de chaque port au dispositif esclave, et construisant des informations topologiques indiquant une connexion entre le dispositif maître et le dispositif esclave en fonction de l'ID de Port reçue et de la valeur de BOND totale reçue reçues par chaque port ;
si aucun dispositif de niveau suivant n'est connecté au dispositif esclave, le dispositif esclave est configuré pour régler la première ID de Port sur un numéro non valable ou maintenir la première ID de Port inchangée, actualiser la valeur de BOND et régler la valeur de BOND actualisée comme valeur de BOND totale, et renvoyer la valeur de BOND totale et la première ID de Port au dispositif maître ;
si un état de port du dispositif de niveau suivant connecté au dispositif esclave est Maître, le dispositif esclave est configuré pour envoyer la première ID de Port au dispositif de niveau suivant, actualiser la valeur de BOND et régler la valeur de BOND actualisée comme valeur de BOND totale, et renvoyer la valeur de BOND totale et une seconde ID de Port renvoyée par le dispositif de niveau suivant au dispositif maître ;
si l'état de port du dispositif de niveau suivant connecté au dispositif esclave est Esclave, le dispositif esclave est configuré pour actualiser la valeur de BOND, envoyer la première ID de Port et la valeur de BOND actualisée au dispositif de niveau suivant.
